Europäisches Patentamt

(19) European Patent Office

Office européen des brevets

(11) Numéro de publication: **0 256 924
B1**

(12) # FASCICULE DE BREVET EUROPEEN

(45) Date de publication du fascicule du brevet:
16.05.90

(21) Numéro de dépôt: **87401782.5**

(22) Date de dépôt: **30.07.87**

(51) Int. Cl.⁵: **B62D 6/02**

(54) Electrovanne proportionelle avec sécurité intégrée.

(30) Priorité: **08.08.86 FR 8611780**

(43) Date de publication de la demande:
**24.02.88 Bulletin 88/8**

(45) Mention de la délivrance du brevet:
**16.05.90 Bulletin 90/20**

(84) Etats contractants désignés:
**DE GB IT**

(56) Documents cités:
**EP-A- 0 141 626
FR-A- 2 170 770**

**PATENT ABSTRACTS OF JAPAN,
vol. 9, no. 191 (M-402)[1914], 7 août 1985; &
JP-A-60 56 671 (JIDOSHA KIKI K.K.) 02-04-1985
PATENT ABSTRACTS OF JAPAN,
vol. 10, no. 118 (M-475)[2175], 2 mai 1986; &
JP-A-60 248 480 (TOYODA KOKI K.K.) 09-12-1985**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Camus, Gérard, 15, rue des Bouchères,
F-95240 Cormeilles-En-Parisis(FR)**
Inventeur: **Quin, Philippe, 15, rue de l'Eglise,
F-91530 Serlaise(FR)**

(74) Mandataire: **Boivin, Claude, 9, rue Edouard-Charton,
F-78000 Versailles(FR)**

## Description

Dans les directions assistées de véhicule automobile, il est connu d'exercer sur le volant de direction un couple de rappel fonction de la vitesse du véhicule.

Ce couple de rappel est par exemple fourni par un vérin agissant sur un ensemble galet-came et soumis à une pression hydraulique établie par une électrovanne proportionnelle réagissant à divers paramètres dont la vitesse du véhicule.

En cas de panne électrique, par exemple coupure d'un fil d'alimentation, la pression hydraulique fournie par l'électrovanne devient nulle et il en est de même du couple de rappel exercé sur le volant. Cela donne au conducteur l'impression qu'une rupture s'est produite dans la direction du véhicule quoique, dans la réalité, la dirigeabilité de ce véhicule soit totalement conservée.

On connait des électrovannes commandées par un ressort taré, l'électro-aimant fournissant un effort opposé à celui du ressort. La pression régulée est alors inversement proportionnelle à l'effort fourni par l'électro-aimant. Mais une telle électrovanne ne peut être utilisée pour la commande d'un couple de rappel sur le volant car en l'absence de courant, la pression régulée est maximale de sorte qu'une panne électrique se traduirait par un durcissement très important de l'effort à exercer sur le volant en donnant au conducteur l'impression d'un blocage de la direction.

La présente invention a pour objet une électrovanne du type à commande proportionnelle qui comprend un servo-moteur fournissant un effort proportionnel à l'intensité du courant parcourant la bobine de ce servo-moteur, telle que décrite par exemple dans le document FR-A 2 514 853, et un distributeur hydraulique à tiroir élaborant un signal de pression hydraulique proportionnel à l'effort fourni par le servo-moteur, et qui est perfectionnée de manière que le signal ne soit pas nul en cas de panne électrique, mais reste à une valeur prédéterminée, correspondant à un couple de rappel du volant rassurant le conducteur tout en l'avertissant d'un défaut.

L'électrovanne selon l'invention est caractérisée en ce qu'elle comporte un électro-aimant de sécurité travaillant en tout ou rien en opposition avec l'action d'un ressort de manière que ce ressort exerce un effort sur le tiroir du distributeur en l'absence de courant et que l'action de ce ressort soit anihilée lorsque la bobine de cet électro-aimant est sous tension.

Cette électrovanne convient notamment pour l'obtention d'un couple de rappel sur un volant de direction.

On a décrit ci-après, à titre d'exemple non limitatif, un mode de réalisation d'une électrovanne proportionnelle selon l'invention, avec référence aux dessins annexés dans lesquels :

La Figure 1 représente l'ensemble de l'électro vanne en fonctionnement normal;

La Figure 2 montre à plus grande échelle le distri buteur hydraulique et l'électro-aimant de sécurité en cas de panne de courant;

La Figure 3 est le schéma de branchement de l'électrovanne.

Telle qu'elle est représentée au dessin, l'électrovanne comprend un servo-moteur électrique, un distributeur hydraulique et un électro-aimant de sécurité qui sont désignés respectivement par les références 1, 2 et 3.

Le servo-moteur comporte un corps formé d'une embase 4a et d'un fourreau 4b qui sont réalisés en un matériau magnétique et qui sont intercalés avec un tube 4c et une culasse 4d en un matériau amagnétique.

Un noyau 5 est monté coulissant par l'intermédiaire d'une douille de guidage à billes 6 sur un axe 7 fixé dans le corps. La course de ce noyau est limitée par une butée supérieure 8 et une butée inférieure 9. Le noyau 5 est solidaire d'un poussoir 10 sur lequel s'exerce l'action d'un ressort de rappel 11.

Dans le corps sont disposées une bobine 12 et une tôle d'armature 13 qui referme le circuit magnétique autour de la bobine.

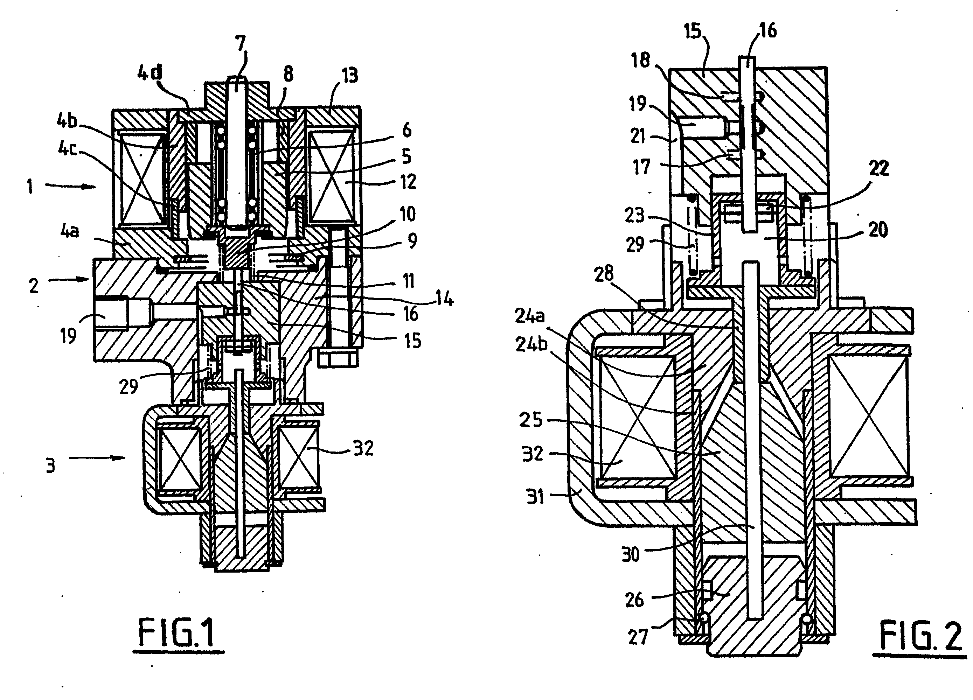

Lorsqu'un courant parcourt la bobine 12, le noyau 5 est déplacé vers le bas, à la Figure 1, contre l'action du ressort de rappel 11 et le poussoir 10 est soumis à un effort proportionnel à l'intensité du courant parcourant la bobine 12.

Le distributeur hydraulique 2 comprend un corps 14 dans lequel est emmanchée une chemise 15. Un tiroir 16 peut coulisser dans cette chemise en regard d'une alimentation sous pression 17, d'un retour 18 au réservoir et d'un orifice d'utilisation 19. L'extrémité du tiroir 16 se trouve dans une chambre de réaction 20 qui est reliée par une rigole 21 à l'orifice d'utilisation 19. La pression régnant dans cette chambre maintient le tiroir 16 en appui contre le poussoir 10.

En temps normal, le tiroir 16 est équilibré entre l'effort exercé par le poussoir 10 et la pression d'utilisation. Cette pression qui a pour valeur le quotient de l'effort exercé par le poussoir 10 par la section du tiroir 16 est donc proportionnelle à cet effort, c'est-à-dire à l'intensité du courant parcourant la bobine 12.

L'extrémité du tiroir 16 est fixée à un amortisseur 22 qui est monté coulissant dans une coupelle 23, ce qui constitue une liaison à mouvement perdu entre la coupelle et le tiroir. L'électro-aimant de sécurité comprend un corps composé d'une culasse 24a en un matériau magnétique et d'un tube 24b en un matériau amagnétique. Sur le tube 24b est monté coulissant un noyau 25 dont la course vers le bas est limitée par un bouchon 26 en butée dans le corps par un jonc 27. Un poussoir 28 est interposé entre le noyau 25 et la coupelle 23; un ressort de sécurité 29 tend à maintenir le poussoir 28 en appui contre le noyau 25. Une tige 30 fixée dans le bouchon 26 traverse le noyau 25 et le poussoir 28 et sert de butée au tiroir 16. Une armature 31 referme le circuit magnétique autour d'une bobine 32 enfilée sur le corps 24a-24b.

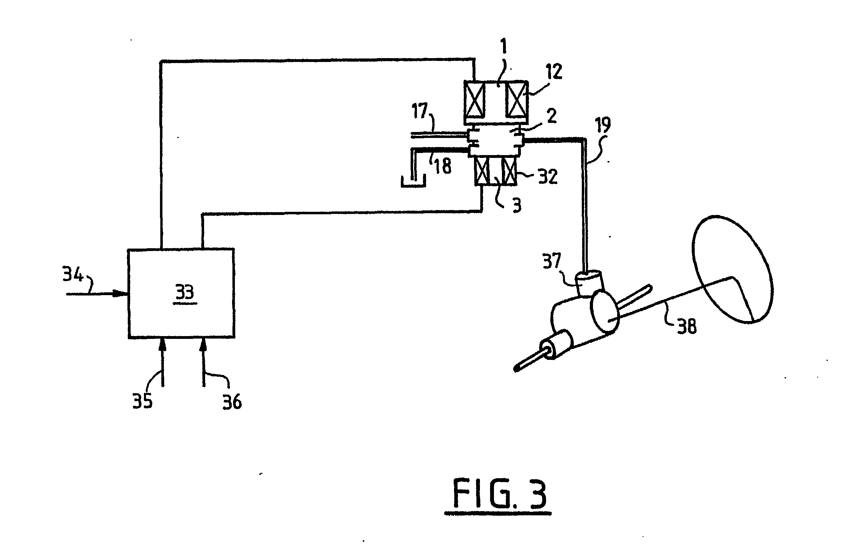

La Figure 3 montre le branchement de l'électrovanne dans le cas de son utilisation pour l'obtention d'un couple de rappel sur un volant de direction. La bobine 12 du servo-moteur 1 et la bobine 32 sont connec tées à un boîtier électronique 33 qui reçoit en 34 le courant de la batterie, en 35 un signal représentant la vitesse du véhicule et en 36 un signal représentant le régime du moteur. La bobine 12 est ainsi parcourue par un courant proportionnel à la vitesse du véhicule. Le circuit d'utilisation 19 du distributeur 2 est relié à un vérin 37 exerçant sur la colonne de direction 38 un couple de rappel fonction de la pression du circuit d'utilisation 19, donc de la vitesse du véhicule.

En temps normal, la bobine 32 est sous tension et le noyau 25 est appelé vers la culasse 24a avec un effort supérieur à celui exercé par le ressort 29 de sorte que ce ressort est écrasé. La coupelle 23 est repoussée en butée contre la chemise 15. Comme il a été indiqué précédemment, la pression dans le circuit d'utilisation 19 est alors proportionnelle à l'intensité du courant dans la bobine 12, la coupelle 23 n'exerçant aucune action sur le tiroir 16.

En cas de défaut du fonctionnement du système électrique, aucun courant ne parcourt alors la bobine 12 ce qui correspondrait à une valeur nulle de la pression dans le circuit 19, donc du couple de rappel de la colonne de direction 38. Mais la bobine 32 n'est plus sous tension et le ressort 29 est libéré. Il repousse la coupelle 23 en appui sur l'amortisseur 22 et transmet son effort au tiroir 16 du distributeur 2. Le tiroir se trouve alors en équilibre entre l'effort exercé par le ressort 29 et la pression d'utilisation régnant dans la chambre 20. Il exerce ainsi sur la colonne de direction 38 un couple de rappel de sécurité fonction du ressort 29.

## Revendications

1. Electro-vanne du type à commande proportionnelle qui comprend un servo-moteur (1) fournissant un effort proportionnel à l'intensité du courant parcourant la bobine (12) de ce servo-moteur et un distributeur hydraulique (2) à tiroir élaborant un signal de pression hydraulique proportionnel à l'effort fourni par le servo-moteur, caractérisé en ce qu'elle comporte un électro-aimant de sécurité (3) travaillant en tout ou rien en opposition avec l'action d'un ressort (29) de manière que ce ressort exerce un effort sur le tiroir (16) du distributeur (2) en l'absence de courant et que l'action de ce ressort soit annihilée lorsque la bobine (32) de cet électro-aimant est sous tension.

2. Electro-vanne selon la revendication 1, caractérisée en ce que l'électro-aimant de sécurité (3) écrase le ressort (20) lorsque la bobine (32) de cet électro-aimant est sous tension.

3. Electro-vanne selon la revendication 1, caractérisée en ce que le ressort (29) et le noyau (25) de l'éctro-aimant agissent de manière antagoniste sur un élément (23) qui est amené sur le noyau en appui sur une butée fixe et est relié au tiroir (16) du distributeur par une liaison à movement perdu.

## Patentansprüche

1. Elektroventil für proportionale Regelung mit einem Servomotor (1), der eine Kraft liefert, welche der Stärke des durch seine Wicklung (12) fliessenden Stroms proportional ist, und einem hydraulischen Verteiler (2) mit einem Steuerschieber, der ein hydraulisches Drucksignal erzeugt, welches der vom Servomotor gelieferten Kraft proportional ist, dadurch gekennzeichnet, daß es einen Sicherheitselektromagneten (3) aufweist, der nach dem Prinzip "Alles oder Nichts" gegen die Kraftwirkung einer Feder (29) arbeitet, derart, daß diese Feder bei fehlendem Strom eine Kraft auf den Steuerschieber (16) des Verteilers (2) ausübt und daß die Wirkung dieser Feder aufgehoben wird, wenn die Wicklung (32) dieses Elektromagneten unter Spannung steht.

2. Elektroventil nach Anspruch 1, dadurch gekennzeichnet, daß der Sicherheitselektromagnet (3) die Feder (29) zusammendrückt, wenn die Wicklung (32) dieses Elektromagneten unter Spannung steht.

3. Elektroventil nach Anspruch 1, dadurch gekennzeichnet, daß die Feder (29) und der Kern (25) des Elektromagneten im entgegengesetzten Sinne auf eine Element (23) wirken, welches sich am einem festen Anschlag abstützend auf dem Kern geführt ist und mit dem Steuerschieber (16) des Verteilers über eine Verbindung mit totem Gang verbunden ist.

## Claims

1. Electrovalve of the proportional control type which comprises a servomotor (1) delivering a force proportional to the intensity of the current flowing through the coil (12) of this servomotor and a hydraulic slide valve (2) providing a hydraulic pressure signal proportional to the force delivered by the servomotor, characterized in that it comprises a safety electromagnet (3) working with all or nothing operation in opposition to the action of a spring (29) so that this spring exerts a force on the slide (16) of the valve (2) in the absence of current and so that the action of this spring is cancelled out when the coil (32) of this electromagnet is fed with power.

2. Electrovalve according to claim 1, characterized in that the safety electromagnet (3) crushes the spring (29) when the coil (32) of this electromagnet is fed with power.

3. Electrovalve according to claim 2, characterized in that the spring (29) and the core (25) of the electromagnet act in an antagonistic way on an element (23) which is brought on to the core in abutment against a fixed stop and is connected to the slide (16) of the valve by an idle travel connection.

FIG.2

FIG.1

**FIG. 3**

EP 0 256 924 B1